# EUROPEAN PATENT APPLICATION

(11) **EP 0 924 260 A2**
(43) Date of publication of application: **23.06.1999**
(21) Application number: 98309965.6
(22) Date of filing: 04.12.1998
(51) Int. Cl.: C08L 69/00

(54) **Polycarbonate formulation and carrier for semiconductor wafers**

(30) Priority: 22.12.1997 US 995483
(71) Applicant: GENERAL ELECTRIC COMPANY, Schenectady, NY 12345 (US)
(72) Inventor: Spilman, Gary Eugene, Evansville, Indiana 47711 (US); Skabardonis, John G., Evansville, Indiana 47712 (US); Gohr, Eric Thomas, Evansville, Indiana 47712 (US); Lindway, Martin J., Newburgh, Indiana 47630 (US); Hamilton, Douglas George, Mount Vernon, Indiana 47620 (US); Bradley, David A., Evansville, Indiana 47720 (US)
(74) Representative: Szary, Anne Catherine, Dr.

(57) **Abstract**

An aromatic polycarbonate composition and articles made from same having less than 300 parts per billion each of ionic impurities, particularly Sulfate and Chloride ions prepared by devolatilizing the ionic impurites from a polycarbonate composition employing an aqueous medium of about 1% by weight based on the weight of the polycarbonate composition. Preferably the devolatilizing is carried out in an extruder during compounding the polycarbonate composition and preferably under a vacuum. Also, the extruded strands of polycarbonate resin are quenched in a water bath having a Sulfate and Chloride ion content of less then 300 ppb each.

## Description

The present invention is directed to a thermoplastic aromatic polycarbonate composition having reduced ionic impurities, while maintaining good processibility properties. The product is a higher quality polycarbonate resin for producing higher quality molded articles such as computer hard drive platter carriers or pre-chip silicon wafer carriers for the computer industry. More specifically, this invention is directed to an improved process and to an improved product from such process as herein described.

Polycarbonate resin may often contain certain impurities which in turn affect their property performance in the final molded article. For example, Sulfate and Chloride ions, if present in sufficient quantities, will affect color and processability of polycarbonate resins for producing pre-chip silicon wafer carriers or computer hard drive platter carriers. The Sulfate ions can react with residual ammonia on the surface of the silicon wafer to form ammonium sulfate which forms a white residue on the surface of a silicon pre-chip wafer. The wafer then requires cleaning before being processed into a computer chip. Additional heat phase exposure such as injection molding, extrusion or compounding thereof may also induce discoloration of the polycarbonate resin. Even with phosphite stabilizers, yellowing of the polycarbonate and hydrolysis of the phosphite can occur particularly at processing temperatures. It is believed that the phosphites, which are susceptible toward hydrolysis at elevated or processing temperatures, form in-situ acid species which can then react with the polycarbonate to possibly increase chain scission and produce side-reactions which can eventually generate color in the molded article. This undesirable process can also occur during extrusion, compounding or molding of the polycarbonate resin.

Moreover, to achieve or improve desirable properties, certain additives are typically employed with the polycarbonate resin during extrusion, compounding or injection molding. It is desirable that such additives not adversely affect processibility. Additionally, it is known to stabilize polycarbonate resin against discoloration by employing phosphites and/or epoxies as stabilizing additives. These stabilizing additives are broadly disclosed in such U.S. Patents as 4,381,358, 4,358,563 and 3,673,146.

However, if certain known impurities can be removed without the use of additives to neutralize the impurities, the removal of the impurities would greatly enhance the properties, of the polycarbonate composition. Moreover, eliminating the additives would avoid the possibility of reducing processability as may occur with additives.

Typical processing of pre-chip silicon wafers involves coating the silicon wafer with a UV polymerizable photoresist, and image-wise irradiating the photoresist to pattern the wafer. Specifically, the photoresist-coated wafer is exposed to UV light through a mask, which is imprinted with a pattern corresponding to the circuity to be constructed on the silicon wafer. The UV light polymerizes the exposed areas of the photoresist. The silicon wafer is then washed with a solvent, which dissolves the areas of photoresist coating which have not been polymerized, but leaves the polymerized areas. The wafer may then be patterned by, for example, metallizing the wafer. The polymerized photoresist is then removed, leaving a wafer which is metallized in the areas where UV light was allowed through the mask.

It is critically important to avoid dust or any other form of contamination when treating pre-chip silicon wafers. It is also desirable to make very large numbers of particular silicon chips. Therefore, when possible, fabrication operations are performed by machines which maintain a dust-free atmosphere. It may therefore be advantageous for a pre-chip silicon wafer carrier to be transparent to some wavelengths of light so that a robitic device may determine how many wafers are in a particular carrier based on reflected light. However, as noted above, it is also desirable for the pre-chip silicon wafer carrier to be opaque to wavelengths of light which could cause polymerization of the photoresist.

Therefore, it is an object of this invention to provide a process for reducing ionic impurities in a polycarbonate resin.

Another object of this invention is to reduce ionic impurities in a polycarbonate resin during melt blending of the polycarbonate composition.

Yet another object of the invention is to reduce Sulfate and Chloride ions in a polycarbonate resin.

Still another object of this invention is to produce a polycarbonate resin having reduced ionic impurities.

Another object of the invention is to provide a pre-chip silicon wafer carrier that can be sealed with a clean atmosphere.

It is a further object of the invention that a human observer be able to see how many wafers are present in such a carrier without having to open the carrier in a suitably clean atmosphere.

It is another object of this invention to provide a polycarbonate resin composition having reduced ionic impurities wherein the polycarbonate resin composition is opaque to wavelengths of light which can cause polymerization of photoresists useful in semiconductor chip fabrication, wherein the same polycarbonate resin compositions is also transparent to some wavelengths of visible light.

It is yet another object of this invention to provide a suitable computer hard drive platter carrier or pre-chip silicon wafer carrier which overcomes the disadvantages of the prior art.

It is a further object of this invention to provide a pre-chip silicon wafer carrier which is opaque to wavelengths of light which can cause polymerization of photoresists useful in semiconductor chip fabrication, wherein the same carrier is also transparent to some wavelengths of visible light.

### Summary of the Invention

This invention is directed to a polycarbonate composition having reduced ionic impurities and to a process for producing reduced ionic impurities in polycarbonate resins. This invention is also directed to a aromatic polycarbonate composition having reduced ionic impurities. The polycarbonate composition may be either injection molded (e.g., to produce a pre-chip silicon wafer carrier), extruded into sheet or film, profile extruded, co-extruded or extruded blow molded.

There is further provided a polycarbonate formulation which has reduced ionic impurities and has specific light transmission qualities which enable it to be transparent to at least some wavelengths of visible light, but also to be opaque to wavelengths of light which cause polymerization of photoresists known to be useful in semiconductor chip fabrication.

### Brief Description of the Drawing

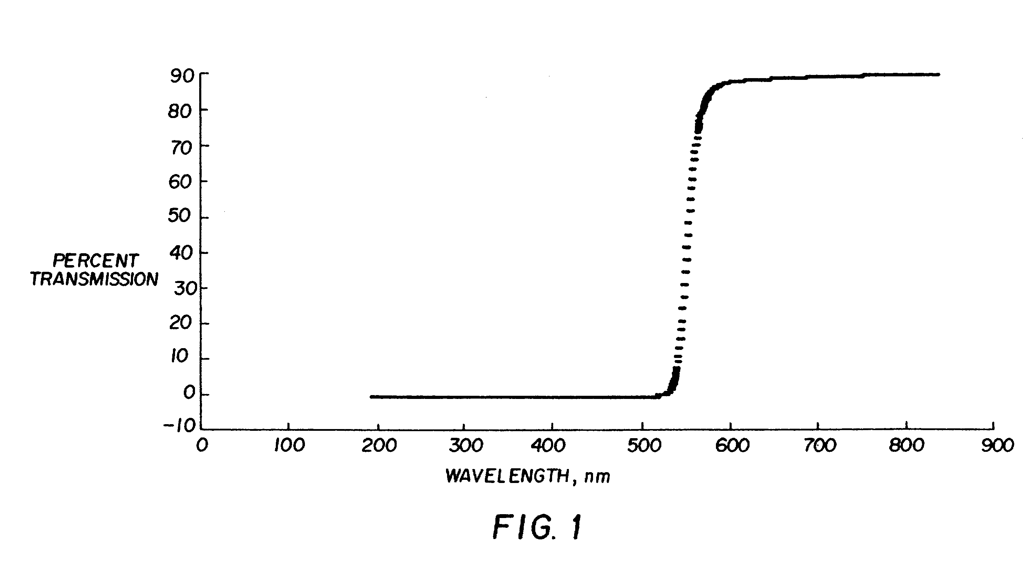

Figure 1 depicts an Ultraviolet-visible light spectrograph of a polycarbonate formulation according to the present invention.

### Detailed Description of the Invention

The process of this invention comprises the devolatilization of the impurities downstream in a melt blending process such as an extruder during compounding of the aromatic polycarbonate resin formulation by employing an aqueous medium. A small amount of the aqueous medium, preferably water, may be added to the formulation during melt blending in an extruder and then removing the ionic impurities by devolatilization, generally, under a vacuum downstream in an extruder. While removal of the Sulfate ions is the preferred ion removal, it has been found that other ions are also removed such as Chloride ions. The Sulfate and Chloride ions are each preferably reduced to levels of less than 300 parts per billion (hereinafter ppb). In a melt blending process, the formulation is extruded through a die into strands which are then pelletized. The strands, before pelletizing are passed through an aqueous medium cooling or quenching bath. Since water has a fairly high ionic concentration, namely Sulfate and Chloride ions, the polycarbonate resin strands become re-contaminated with these ions. Therefore, the process of this invention further requires using an aqueous cooling bath through which the extruded strands are passed having a low ion concentration, particularly a low Sulfate and Chloride ion content. Therefore, the water bath should be analyzed for at least Sulfate and Chloride ion concentration which should be less than about 300 ppb each or at minimum should be deionized water.

The processes of compounding or melt blending the aromatic polycarbonate resin as employed herein are well known to those skilled in the art of compounding or melt blending an aromatic polycarbonate formulation, respectively. Moreover, these processes are disclosed in numerous articles and patents for preparing polycarbonate molding formulations. Preferably, the composition is first compounded or melt blended with the additive materials, generally, in an extruder. The compounded formulation is extruded into strands which are generally quenched in an aqueous bath, pelletized, dried and processed under heat and pressure into the finished article. The finished article may be injection molded, profile extruded, sheet or film extruded, co-extruded or extruded blow molded into hollow shapes such as single or multi-layer plastic objects such as bottles, computer hard drive platter carriers or silicon pre-chip wafer carriers for the computer industry. A small amount of an aqueous medium is added to the compounding formulation to enhance the removal of the ionic impurities. An aqueous quenching bath having a low ion concentration is also used to avoid re-introduction of ionic impurities. The amount of aqueous medium, preferably water, is that amount sufficient to reduce ionic impurities, particularly Sulfate and Chloride ions to less than about 300 ppb. The amount of aqueous medium added is about 0.25 to about 2.0 weight % based on the weight of the polycarbonate formulation, and preferably about 0.75 to about 1.5 weight %. About 1.0% has been found to be optimum. The cooling or quenching aqueous bath should have a low ion concentration, preferably wherein the Sulfate and Chloride ion concentration is each less than about 300 ppb, and in particular each being no greater than about 100 ppb and more particularly each being less than about 50 ppb.

The aqueous medium may be added with the ingredients in the feed hopper of the extruder or may be added downstream to the melt. Obviously, the aqueous medium should be added prior to devolatilization of the aqueous medium and removal of ionic impurities. The aqueous medium may be added as one shot or may be added in several increments such as part in the feed hopper and the balance downstream in the extruder or in increments down from the feed hopper.

The aromatic polycarbonate resin employed herein may be any of the known aromatic polycarbonates or co-polymers or terpolymers thereof, or blends of polycarbonates with other polymers, co-polymers or terpolymers thereof. The aromatic polycarbonate employed in the practice of this invention may be prepared by reacting a dihydric phenol with a carbonate precursor in the presence of an acid acceptor and generally a molecular weight regulator. Any dihydric phenol may be employed in preparing the polycarbonate resin disclosed herein. Preferably, they are mononuclear or polynuclear aromatic compounds containing as functional groups two hydroxyl radicals, each of which is attached directly to a carbon atom of an aromatic nucleus. Examples of some of the dihydric phenols which can be employed in the practice of this invention are bisphenols such as 1,1-bis (4-hydroxyphenyl) methane, 2,2 - bis(4-hydroxyphenyl) propane, 4,4 - bis(4 - hydroxyphenyl) heptane, etc.; dihydric phenol ethers such as bis(4 - hydroxyphenyl ether, bis(3,5 - dichloro - 4 - hydroxyphenyl) ether, etc.; dihydroxy diphenyls such as p,p' - dihydroxydiphenyl, 3,3' - dichloro - 4,4' - dihydroxy-diphenyl, etc.; dihydroxyaryl sulfones such as bis(4-hydroxyphenyl) sulfone, bis(3,5 - dimethyl - 4 - hydroxyphenyl) sulfone, bis (3 - methyl - 5 - ethyl - 4 - hydroxyphenyl) sulfone, etc.; dihydroxy benzenes, resorcinol, hydroquinone; halo- and alkyl-substituted dihydroxy benzenes such as 1,4 - dihydroxy - 2 - chlorobenzene, 1,4-dihydroxy - 2,3 - dichlorobenzene, 1,4 - dihydroxy - 2-methylbenzene, etc.; and dihydroxy diphenyl sulfoxides such as bis(4-hydroxyphenyl) sulfoxide, bis(3,5-dibromo-4-hydroxyphenyl) sulfoxide, etc.

The carbonate precursor employed in the practice of this invention can be either carbonyl halide or a haloformate. The carbonyl halides which can be employed herein are carbonyl bromide, carbonyl chloride, carbonylfluoride, etc.; or mixtures thereof. The haloformates suitable for use herein include bishaloformates of dihydric phenols (bischloroformates of hydroquinone, etc.) or glycols (bishaloformates of ethylene glycol, neopentyl glycol, polyethylene glycol, etc). While other carbonate precursors will occur to those skilled in the art, carbonyl chloride, also known as phosgene, is preferred.

The reaction disclosed above is preferably known as an interfacial process or reaction between the dihydric compound and a carbonyl chloride such as phosgene. Another process for preparing the aromatic polycarbonate of this invention is the transesterification process which involves the transesterification of an aromatic dihydroxy compound and a diester carbonate. This process is known as the interfacial melt process. In the practice of this invention, the process of producing the aromatic polycarbonate is not critical. The critical feature of this invention is preparing the aromatic polycarbonate resin formulation by devolatilization of the aqueous medium containing the ionic impurities as described above. As used herein, aromatic polycarbonate shall mean and include any of the aromatic polycarbonates and combinations thereof as set forth previously.

The polycarbonate composition of the invention may also include such additives as UV stabilizers, thermal stabilizers, release agents, teflon, fillers and reinforcing fillers such as glass fibers (short or long glass fibers), carbon fibers, talc, silica and other known additives employed in polycarbonate compositions.

However, for applications wherein it is important for the molded article to have low volatiles (e.g., hard drive platter carriers on pre-chip silicon wafer carriers), it is necessary that the additives be carefully selected based in this criteria. For example, many fillers which form a matrix rather than a homogeneous mixture with the polycarbonate should not be used because they could lead to dust, which must be avoided in the manufacture of hard disks or electronic chips.

In applications such as optical screening transport device used for storage and shipment of photosensitive electronic devices, it is advantageous to add a radiation-absorbing additive to the polycarbonate optical screening enclosure. The transport device simultaneously prevents contamination of the photosensitive semiconductor device, and screens out wavelengths of light which would react with the photosensitive device (e.g., photopolymerize a photoresist coating). In a preferred embodiment of the transport device, less than 3% of light having any wavelengths between 250 and 450nm is transmitted through the transport device, while at least 25% of some wavelength of light between 600nm and 1500nm is transmitted. In this preferred embodiment, the level of outgassing measured at 1 atmosphere and 100°C by the technique described below is less than 0.5% by weight of the polycarbonate and the leachable chloride content and sulfate content is less than 300ppb. In a more preferred embodiment of the invention, the transport device transmits less than 2% of light having a wavelength between 190 and 500nm., and transmits at least 20% of some visible wavelength of light. In a most preferred embodiment of the invention, the transport device transmits less than 0.5% of light having a wavelength between 190 and 500nm, and the level of outgassing measured under the conditions described above is less than 0.1 % by weight of the polycarbonate in the molded transport device.

Outgassing may be measured by various known techniques. Briefly, one method involves placing product pellets in a sealed container at a specified temperature and pressure for a given time. At the conclusion of the specified time, the then-equilibrated airspace above the pellets within the container is sampled and analyzed using gas chromatography and mass spectrometry. This method yields a semi-quantitative indication of the levels of volatile species which evolve at the given temperature and indicates the identity of said species. A more sensitive dynamic method uses a super cooled absorbent to trap the volatiles being removed while constantly purging with inert gas. After a period of time, the trapped materials are desorbed via heating and analyzed using gas chromatography and mass spectrometry. In one measurement, this latter test yielded a desorption level of 0.5ppm for a sample made according to the present invention, while a commercial sample yielded a desorption level of 31ppm.

Leachable chloride content may also be determined via known methods. For example, the content may be determined by soaking polycarbonate pellets in pure deionized water at elevated temperature (e.g., 50-80°C) for a predetermined time (e.g., 1-24 hours). At the completion of this time, the pellets are removed, and the water is injected into a liquid chromatograph using an ion-exchange separation to detect chloride ions at the parts-per-billion level. Alternatively, the ionic content may be determined by dissolving the polycarbonate in a chlorinated solvent, extracting with deionized water, and measuring the ionic content of the water as described in Example 1.

Typical photosensitive electronic devices which are protected by the optical screening transport devices are pre-chip semiconductor wafers coated with an ultra-violet light-sensitive photoresist, but other photosensitive electronic devices could also be protected by the transport devices.

In a preferred embodiment, the transport device comprises a plurality of additives which absorb UV radiation. In a more preferred emobdiment, the transport device comprises one or more benzotriazole additives. Suitable benzotriazole additives include the "Tinuvin" additives sold by Ciba Geigy. A list of such additives, together with their chemical structures is available in the Ciba Specialty Chemicals Corporation Catalog and associated MSDS sheets and technical data sheets, which are incorporated herein by reference. In a most preferred embodiment, the transport device comprises an orange dye together with a plurality of benzotriazole additives.

### Detailed Description of the Examples of This Invention

This invention can be further described by means of the following Examples; it being understood, however, that this invention shall in no way be restricted by these Examples. In the Examples where amounts are in terms of percent, they are percent by weight.

### Example 1

Four samples of about 1000 grams each of a polycarbonate resin were prepared as follows:

Sample A was an aromatic polycarbonate powder having an intrinsic viscosity of about 0.50 deciliters per gram (dl/g) as measured at 20°C in methylene chloride. The polycarbonate powder was not melt extruded in an extruder.

Sample B was prepared using the polycarbonate powder of Sample A by melt blending in an extruder a formulation of the polycarbonate powder of Sample A and standard additives of mold release, thermal stabilizers and colorants. This sample was melt blended in a vented extruder at about 330°C and at an extrusion pressure of about 1200 psi. The extruded strands of Sample B were quenched in a water bath employing regular city water.

Sample C was also an aromatic polycarbonate powder but having an intrinsic viscosity of about 0.45 dl/g as determined under the conditions as employed with Sample A. The Sample C was also not melt extruded in an extruder.

Sample D was prepared employing the polycarbonate powder of Sample C and was melt blended in an extruder under the same extruder conditions as employed with Sample B. The formulation was essentially the same as the formulation of Sample B except that about 1.0 weight % of water was added to the formulation based on the weight of the formulation. Downstream in the extruder the formulation was devolatilized under a vacuum of greater than about 20 inches of mercury through the vent in the extruder. The water bath employed for quenching the extruded polycarbonate strands was deionized water having a Sulfate content of about 12 ppb and a Chloride content of about 12 ppb.

Each formulation contained the same weight % of standard additives.

Each formulation was analyzed by Ion Chromatography (IC) analysis for Sulfate and Chloride ion content. The results obtained were as follows in TABLE 1 below. The test method consists of dissolving about 3 - 5 grams of the polycarbonate sample in 25 ml. Of methylene chloride. The ions are then extracted with 15 to 20 ml. Of deionized water. A 5 ml. aliquot of extracted deionized water is injected on an Ion Chromatograph to determine total free ions in the sample.

**TABLE 1**

| Sample | Total Free Sulfate Ion Content | Total Free Chloride Ion Content |
|---|---|---|
| A | 565 | 1945 |
| B | 450 | 550 |
| C | 525 | 1555 |
| D | 276 | 156 |

### Example 2

This Example is set forth to show the amount of leachable Sulfate and Chloride ions that accumulate on the surface of the polycarbonate resin strands from plain city water as compared to deionized water after passing the strands of the polycarbonate resin through an aqueous quenching medium. The amount of leachable ions is primarily those ions on the surface of the polycarbonate strands picked up from the water bath. In this test procedure 25 ml. of deionized water is added to about 10 grams of polycarbonate sample The sample is then kept in an oven at 55°C for about 16-20 hours. A 5 ml. aliquot of extracted deionized water from the sample is injected on an Ion Chromatograph to determine leachable-free ions on the surface of the polycarbonate as picked up from the quenching water bath. Pellets from Sample D of Example 1 above and pellets from Sample E which was prepared in accordance with the procedure for preparing Sample D above except that the quenching water bath employed standard city water instead of deionized water. The results obtained were as follows:

**TABLE 2**

| | Leachable Chloride Ions | Leachable Sulfate Ions |
|---|---|---|
| Sample D Pellets | 10 | 20 |
| Sample E Pellets | 50 | 100 |

As can be seen from the Examples, a polycarbonate composition employing water in the formulation during compounding, then devolatilizing the water which is probably in the form of water vapor or steam and then cooling the extruded strands in a water bath having a low ion concentration reduces the ionic impurities in the polycarbonate formulations particularly Sulfate and Chloride ions.

### Example 3

This Example is set forth to demonstrate making a polycarbonate formulation which is transparent to at least some visible wavelength range of light, but is opaque to wavelengths of light which could cause polymerization of UV-curable photoresists.

A sample of about 3,000 grams of a polycarbonate formulation was prepared by melt blending in an extruder the following formulation:

**TABLE 3**

| Component | Parts by Weight |
|---|---|
| linear polycarbonate, Mw ~ 30,000 - 60,000 | 100.0 |
| organic phosphite stabilizer | 0.03 |
| organic ester mold release | 0.30 |
| benzotriazole UV max 312, 353nm | 1.00 |
| benzotriazozle UV max 300, 340nm | 2.00 |
| phthaloperinone solvent organe dye 380-520nm | 0.08 |

The extruder produces a pelletized polycarbonate formulation.

A UV-visible scan of this formulation was then prepared by the following procedure. First, a color chip having dimensions 2" x 3" x 0.090" was prepared in an injection molding machine at a temperature of 550°F. Second, the chip was placed in a sample holder and inserted in the analyzer beam of a Varian Cary-5 Scanning UV-Visible spectrometer. The chip was scanned over a wavelength range between 190 - 830 nm. Figure 1 depicts the spectrogram of the formulation. Note that the formulation has very low transmission for wavelengths shorter than 500nm.

### Example 4

This Example is set forth to demonstrate how to make an optical screening transport device for transporting photosensitive electronic devices. Polycarbonte formulation pellets made according to Example 3 were injection molded via known methods to produce a transport device having a plurality of vertical spacers suitable for holding disks.

Although the invention has been described by references to particular illustrative embodiments thereof, many variations and modifications of the invention may become apparent to those skilled in the art without departing from the spirit and scope of this invention as set forth in the appended claims hereto.

## Claims

1. A polycarbonate formulation which comprises: polycarbonate having less than 300 parts per billion of sulfate ions and less than 300 parts per billion of chloride ions, and a radiation-absorbing additive, wherein the formulation transmits less than 3% of light having any wavelength between 250 and 450nm, and transmits at least 25% of some wavelength of light between 600nm and 1500nm, and wherein said formulation exhibits levels of outgas at 1 atm and 100° C of less than 0.5% by weight of polycarbonate.

2. A polycarbonate formulation according to claim 1, wherein the formulation transmits less than 2% of light having any wavelength between 190 and 500 nm, and transmits at least 70% of some visible wavelength of light.

3. A polycarbonate formulation according to claim 2, wherein the formulation transmits less than 0.5% of light having a wavelength range between 190 and 500 nm.

4. A polycarbonate formulation according to claim 3, wherein the formulation exhibits levels of outgas at 1 atm and 100°C of less than 0.1% by weight of polycarbonate.

5. A polycarbonate formulation which comprises: a majority of polycarbonate, and a radiation-absorbing additive, wherein the formulation transmits less than 3% of light having any wavelength between 250 and 450nm, and transmits at least 25% of some wavelength of light between 600nm and 1500nm, and wherein the formulation exhibits levels of outgas at 1 atm and 100°C of less than 0.5% by weight of polycarbonate, which formulation is made by a process which comprises: melt blending a polycarbonate resin with sufficient aqueous medium to reduce the concentration of ionic impurities, the majority of which is comprised of sulfate and chloride ions, to less than about 300 parts per billion of sulfate ions and chloride ions as determined by ion chromatography, devolatilizing the water with ionic impurities from the composition, extruding the polycarbonte resin together with the radiation absorbing additive into an aqueous medium quenching bath, which bath has a ionic concentration of ionic impurities.

6. A polycarbonate formulation which comprises: polycarbonate having less than 300 parts per billion of sulfate ions and less than 300 parts per billion of chloride ions, and a radiation-absorbing additive; wherein the formulation is transparent to at least some wavelength range of visible light, but is opaque to wavelengths of light which can cause polymerization of photoresists which are useful in semiconductor chip fabrication.

7. A polycarbonate formulation according to claim 6, wherein the formulation is opaque to wavelengths of light between 190nm and 500nm.

8. A polycarbonate formulation according to any preceding claim, wherein the radiation-absorbing additive is a benzotriazole.

9. A polycarbonate formulation according to any preceding claim, which comprises a plurality of radiation-absorbing additives.

10. An optical screening transport device having a plurality of spacers suitable for holding a plurality of disks, which device comprises a polycarbonate formulation comprising polycarbonate having less than 300 parts per billion of sulfate ions and less than 300 parts per billion of chloride ions, and a radiation-absorbing additive; wherein the formulation transmits less than 3% of light having any wavelength between 250 and 450nm, and transmits at least 25% of some wavelength of light between 600nm and 1500nm, and wherein the formulation exhibits levels of outgas at 1 atm and 100°C of less than 0.5% by weight of polycarbonate.
